(19) Europäisches Patentamt

European Patent Office

Office européen des brevets

(11) **EP 1 167 440 A1**

(12) **EUROPEAN PATENT APPLICATION**
published in accordance with Art. 158(3) EPC

(43) Date of publication:
**02.01.2002 Bulletin 2002/01**

(51) Int Cl.⁷: **C08L 27/06**
// (C08L27/06, 51:06),
C08L33:06

(21) Application number: **00906653.1**

(22) Date of filing: **03.03.2000**

(86) International application number:
**PCT/JP00/01256**

(87) International publication number:
**WO 00/53674 (14.09.2000 Gazette 2000/37)**

(84) Designated Contracting States:
**BE DE ES FR GB IT NL**

(30) Priority: **09.03.1999 JP 6152599**

(71) Applicant: **KANEKA CORPORATION**
**Osaka-shi, Osaka 530-8288 (JP)**

(72) Inventors:
• **MORI, Toshiyuki**
**Akashi-shi, Hyogo 673-0844 (JP)**

• **KANDA, Toshihiko**
**Akashi-shi, Hyogo 673-0018 (JP)**
• **IKEOKU, Shiro**
**Kobe-shi, Hyogo 655-0872 (JP)**
• **TAKAKI, Akira**
**Kobe-shi, Hyogo 657-0025 (JP)**

(74) Representative: **VOSSIUS & PARTNER**
**Siebertstrasse 4**
**81675 München (DE)**

(54) **VINYL CHLORIDE RESIN COMPOSITION**

(57)      A vinyl chloride resin composition having an excellent molding processability which is improved in occurrence of plate out onto a metallic surface of molding machines without lowering the physical properties and appearance of products therefrom, and which comprises a vinyl chloride resin and 0.3 to 50 parts by weight of a polymer (I) having a crosslinked structure per 100 parts by weight of said vinyl chloride resin, wherein the polymer (I) is obtained by polymerizing a monomer component comprising 50 to 98 parts by weight of a monomer component (A) comprising 60 to 100 % by weight of at least one monomer selected from the group consisting of a methacrylate monomer, an acrylate monomer, a vinyl cyanide monomer and an aromatic vinyl monomer and 0 to 40 % by weight of other vinyl monomer copolymerizable therewith (the total being 100 % by weight), and 2 to 50 parts by weight of a polyfunctional monomer (B), the total of said (A) and (B) being 100 parts by weight, in the presence or absence of an elastomeric polymer, the volume average particle size of said polymer (I) is from 10 to 1,000 nm, and the glass transition temperature Tg of a polymer formed when a monomer or monomers other than the polyfunctional monomer are polymerized is not less than 20°C.

EP 1 167 440 A1

**Description**

TECHNICAL FIELD

The present invention relates to a vinyl chloride resin composition. More particularly, the present invention relates to a vinyl chloride resin composition having a good molding processability, particularly the composition that occurrence of plate out onto the metallic surface of a molding machine is restrained without increasing a sticking tendency of a molten resin onto the metallic surface of a molding machine.

BACKGROUND ART

Vinyl chloride resins which are representative thermoplastic resins, have good physical and chemical properties and an economical advantage. On the other hand, vinyl chloride resins have a problem of being fragile. It is known, for the purpose of improving the impact resistance, to incorporate the vinyl chloride resins with graft copolymers wherein methyl methacrylate, styrene, acrylonitrile or the like is graft-polymerized onto an elastomeric trunk polymer such as an elastomeric diene polymer or an elastomeric alkyl acrylate polymer. These graft copolymers have been popularly used as an modifier which can improve the impact resistance without impairing excellent properties of vinyl chloride resins.

Vinyl chloride resins (hereinafter also referred to as "PVC") have the defect that they are poor in processability in every sense. That is to say, not only the molding-processable region is narrow since vinyl chloride resins have a high melt viscosity and accordingly are poor in fluidity and since they are easy to be thermally decomposed, but also they cause various problems in molding since they are easy to stick onto the metallic surface of a molding machine.

In general, for the purpose of eliminating the problems in molding processing, PVC is incorporated with various additives as well as an impact modifier, including a processing aid such as a copolymer composed of an alkyl methacrylate as a main component and various modifiers such as a modifier for heat distortion temperature.

It is also well known that in molding processing of thermoplastic resins such as PVC, various molding failures result from plate out onto the metallic surface of a molding machine.

The plate out is a phenomenon that substances derived from a PVC compound accumulate onto the metallic surface of a molding machine. For example, if plate out occurs in calendering, there arise problems that peelability from a calender roll is lowered, appearance of molded sheet products is lowered owing to transfer of plate out substances to the molded products, productivity is lowered or it is difficult to conduct operation for a long time. In extrusion, too, there arise problems that appearance of products is lowered or it is difficult to conduct extrusion for a long time. It is known that such a plate out occurs when a combination of various additives or the amounts thereof is not proper. Thus, the plate out makes molding processing of PVC difficult more.

Of the additives, those having a relatively low affinity with the resin, e.g., external lubricant, antistatic agent and stabilizer, are easy to come out of the resin during the molding, so they tend to cause bleeding or plate out onto the metallic surface of a molding machine. Also, there is a case that these additives having a low affinity indirectly act to induce plate out of other additives.

For suppression of the plate out, it is required to use a proper combination of additives and, in addition, to decrease the amounts of additives having a relatively low affinity with the resin such as external lubricant and antistatic agent as small as possible. However, for example, an external lubricant plays an important role to provide the molten resin with the peelability from the metallic surface of a molding machine or the lubricity. Therefore, the decrease in the amount of external lubricant increases a tendency of adhesion onto the metallic surface to cause problems such as processing failure, poor appearance of products, lowering of productivity and impossibility of long time operation.

Also, a combination of the kinds of usable additives and the amounts thereof is markedly limited in order to avoid occurrence of plate out, so it often makes it difficult to design a formulation. For example, Japanese Patent Publication Kokai No. 6-228334 discloses that the processability is improved in plate out and stickiness by using, as an antistatic agent, a combination of specific surfactants having external lubricity and internal lubricity in molding of PVC sheets. However, the additives usable in this case are remarkably limited.

It is an object of the present invention to improve the molding processability of a vinyl chloride resin composition, particularly to suppress the plate out onto a metallic surface of a molding machine, without lowering the physical properties and appearance of products prepared from the vinyl chloride resin composition and without increasing a sticking tendency of the molten resin onto the metallic surface of a molding machine.

A further object of the present invention is to provide a vinyl chloride resin composition which is improved in molding processability without impairing the physical properties and appearance.

DISCLOSURE OF INVENTION

The present inventors have found, as a result of an intensive study about improvement in molding processability of vinyl chloride resin compositions, that occurrence of plate out onto the metallic surface of a molding machine can be remarkably suppressed without lowering the physical properties and appearance of molded products and without increasing a sticking tendency of the molten resin onto the metallic surface of a molding machine by incorporating a small amount of a specific polymer having a crosslinked structure into a vinyl chloride resin.

Thus, the present invention provides a vinyl chloride resin composition comprising a vinyl chloride resin and 0.3 to 50 parts by weight of a polymer (I) having a crosslinked structure per 100 parts by weight of said vinyl chloride resin, said polymer (I) being characterized in that it is prepared by polymerizing a monomer component comprising 50 to 98 parts by weight of a monomer component (A) comprising 60 to 100 % by weight of at least one monomer selected from the group consisting of a methacrylate monomer, an acrylate monomer, a vinyl cyanide monomer and an aromatic vinyl monomer and 0 to 40 % by weight of other vinyl monomer copolymerizable therewith (the total being 100 % by weight), and 2 to 50 parts by weight of a polyfunctional monomer (B), the total of said (A) and (B) being 100 parts by weight, in the presence or absence of an elastomeric polymer, the volume average particle size of said polymer (I) is from 100 to 10,000 Å (10 to 1,000 nm), and the glass transition temperature Tg of a polymer formed when a monomer or monomers other than said polyfunctional monomer are polymerized is not less than 20°C.

The crosslinked polymer (I) is preferably such that the content of a component which is soluble in methyl ethyl ketone and is reprecipitated with methanol is not more than 10 % by weight. The crosslinked polymer (I) is preferably those prepared under polymerization conditions which produce a polymer having a viscosity average molecular weight of at least 100,000 when the component other than the polyfunctional monomer is polymerized.

The crosslinked polymer (I) is preferably a non-graft polymer which is obtained by polymerizing the above-mentioned monomer component comprising the monomers (A) and (B) in the absence of an elastomeric polymer, but may be a graft polymer containing an elastomeric polymer portion which is obtained by polymerizing the monomer component in the presence of an elastomeric polymer. Preferably, the content of an elastomeric polymer portion having a Tg of not more than -20°C in the crosslinked polymer (I) is between 0 % by weight and less than 20 % by weight.

The polyfunctional monomer (B) which constitutes the crosslinked polymer (I) is preferably a polyfunctional aromatic vinyl monomer. Also, the monomer component (A) which constitutes the crosslinked polymer (I) is preferably composed of 0 to 100 % by weight of a methacrylate monomer, 0 to 40 % by weight of an acrylate monomer, 0 to 40 % by weight of a vinyl cyanide monomer, 0 to 90 % by weight of an aromatic vinyl monomer and 0 to 40 % by weight of other vinyl monomer copolymerizable therewith (the total of them being 100 % by weight). The polymerization of the above-mentioned monomer component comprising the monomers (A) and (B) may be carried out in a single stage or in multi-stages. The use of a monomer capable of forming a soft polymer is effective for improving the granulation property and the powder properties. Crosslinked polymer (I) having at least one inner layer formed by polymerizing a monomer component comprising 50 to 98 % by weight of a monomer (a1) selected from the group consisting of 0 to 100 % by weight of a methacrylate monomer, 0 to 40 % by weight of an acrylate monomer, 0 to 40 % by weight of a vinyl cyanide monomer, 0 to 90 % by weight of an aromatic vinyl monomer and 0 to 40 % by weight of other vinyl monomer copolymerizable therewith and 2 to 50 % by weight of a polyfunctional aromatic vinyl monomer (b1) (the total of (a1) and (b1) being 100 % by weight), and an outer layer formed by polymerizing a monomer component comprising 50 to 100 % by weight of a monomer (a2) selected from the group consisting of 0 to 50 % by weight of a methacrylate monomer, 50 to 100 % by weight of an acrylate monomer, 0 to 40 % by weight of a vinyl cyanide monomer, 0 to 50 % by weight of an aromatic vinyl monomer and 0 to 40 % by weight of other vinyl monomer copolymerizable therewith and 0 to 50 % by weight of a polyfunctional aromatic vinyl monomer (b2) (the total of (a2) and (b2) being 100 % by weight) is excellent in granulation property and powder properties in addition to the effect of improving the molding processability.

In the vinyl chloride resin composition, it is preferable that the difference in refractive index between the crosslinked polymer (I) and a vinyl chloride resin is within the range of ±0.1. The vinyl chloride resin composition is prepared, for example, by simultaneously blending a vinyl chloride resin, additives and the crosslinked polymer (I), or by previously blending a vinyl chloride resin with the crosslinked polymer (I) and then blending the resultant with additives, or by previously blending the crosslinked polymer (I) with additives and then blending the resultant with a vinyl chloride resin.

The Tg of a polymer formed when a monomer or monomers other than the polyfunctional monomer, namely only the monomer component (A), is polymerized in the presence or absence of an elastomeric polymer denotes a value calculated according to the Fox equation from Tg values of homopolymers, which are described in a publication such as Polymer Handbook (John Willy & Sons. Inc., 1989), of the respective monomers including monomers which constitute the elastomeric polymer and the weight fractions of these monomers.

BEST MODE FOR CARRYING OUT THE INVENTION

The polymer (I) having a crosslinked structure (hereinafter also referred to as "polymer (I)") used in the present invention has an adequate affinity with additives having a relative low affinity with vinyl chloride resins, e.g., external lubricant, as well as a good dispersibility into vinyl chloride resins, and it serves to prevent these additives from migrating onto the metallic surface of a molding machine from the molten resins.

The term "vinyl" as used herein comprehends not only vinyl group, but also copolymerizable C=C bonds such as vinylidene group.

The polymer (I) is obtained by polymerization of a monomer component (100 parts by weight in total) comprising 50 to 98 parts by weight, preferably 70 to 97 parts by weight, more preferably 80 to 97 parts by weight, still more preferably 90 to 96 parts by weight, of a monomer component (hereinafter also referred to as "monomer component (A)") composed of 60 to 100 % by weight, preferably 75 to 100 % by weight, more preferably 90 to 100 % by weight, of at least one monomer selected from the group consisting of a methacrylate monomer, an acrylate monomer, a vinyl cyanide monomer and an aromatic vinyl monomer and 0 to 40 % by weight, preferably 0 to 25 % by weight, more preferably 0 to 10 % by weight, of other vinyl monomers copolymerizable therewith (the total being 100 % by weight), and 2 to 50 parts by weight, preferably 3 to 30 parts by weight, more preferably 3 to 20 parts by weight, still more preferably 4 to 10 parts by weight, of a polyfunctional monomer (hereinafter also referred to as "polyfunctional monomer (B)").

If the proportion of the total of at least one monomer selected from the group consisting of a methacrylate monomer, an acrylate monomer, a vinyl cyanide monomer and an aromatic vinyl monomer in the monomer component (A) is less than 60 % by weight, no adequate affinity with additives is obtained, so no sufficient plate out-suppressing effect is obtained.

The monomer component (A) to constitute the polymer (I) is preferably composed of 0 to 100 % by weight, especially 30 to 100 % by weight, more especially 40 to 70 % by weight, of a methacrylate monomer, 0 to 40 % by weight, especially 0 to 20 % by weight, more especially 2 to 18 % by weight, of an acrylate monomer, 0 to 40 % by weight, especially 0 to 30 % by weight, more especially 0 to 10 % by weight, of a vinyl cyanide monomer, 0 to 90 % by weight, especially 0 to 60 % by weight, more especially 20 to 50 % by weight, of an aromatic vinyl monomer and 0 to 40 % by weight, especially 0 to 25 % by weight, more especially 0 to 10 % by weight, of other vinyl monomer copolymerizable therewith (the total of them being 100 % by weight). If the proportion of the acrylate monomer is more than 40 % by weight, or if the proportion of the vinyl cyanide monomer is more than 40 % by weight, or if the proportion of the aromatic vinyl monomer is more than 90 % by weight, or if the proportion of the copolymerizable other vinyl monomer is more than 40 % by weight, the dispersibility into PVC is lowered, so the physical properties of molded articles tend to be lowered or a sufficient plate out-preventing effect tends to be difficult to obtain.

The polymer (I) has, as mentioned above, an adequate affinity with additives having a relatively low affinity with vinyl chloride resins and, in addition, it efficiently retains these additives based on having a crosslinked structure. Thus the polymer (I) prevents migration of these additives from a molten resin to a metallic surface of a molding machine to exhibit a good plate out-suppressing effect. The higher the degree of crosslinking of the polymer (I), the more the plate out-suppressing effect tends to increase. Therefore, if the amount of the polyfunctional monomer (B) is less than 2 parts by weight per 100 parts by weight of the total of the monomer component (A) and the polyfunctional monomer (B), formation of the crosslinked structure is insufficient and no sufficient plate out-suppressing effect is obtained. On the other hand, if the amount of the polyfunctional monomer (B) exceeds 50 parts by weight, there arise problems that the polymerization becomes unstable and it is difficult to synthesize the polymer (I) or the amount of scale in polymerization increases. Moreover, in general the polyfunctional monomer (B) is expensive and, therefore, the raw material cost increases.

Also, it is preferable from the viewpoint of the plate out-suppressing effect that the polymer (I) is uniformly crosslinked all over the polymer particle. Thus, it is preferable to conduct the polymerization so that the polyfunctional monomer (B) is included in at least 50 % by weight portion, preferably at least 80 % by weight portion, of the polymer (I), rather than maldistributing the polyfuncitonal monomer (B) in a specific portion. For example, it is preferable to mix all monomers including the polyfunctional monomer (B) and adding the mixture to the polymerization system. Even in the case of a multi-stage polymerization, it is preferable to use the polyfunctional monomer (B) in the form of a mixture with other monomers so that the polyfunctional monomer (B) is included in at least 50 % by weight portion, preferably at least 80 % by weight portion, of the polymer (I).

As one of the measures to indicate the state of crosslinking is mentioned the content of a free polymer, and it is considered that if the content is small, the entire particle is sufficiently crosslinked. The proportion of a component which is soluble in methyl ethyl ketone and is reprecipitated with methanol (the component being hereinafter also referred to as "free polymer (I-1)") can be used as a measure of the content of free polymer.

It is preferable that the polymer (I) has a content of free polymer (I-1) of at most 10 % by weight, especially at most 7 % by weight, more especially at most 4 % by weight, still more especially at most 2 % by weight. If the content of free polymer (I-1) is more than 10 % by weight, in other words, if the entire polymer particle is not sufficiently crosslinked, the plate out-suppressing effect is lowered. The decrease of the content of free polymer (I-1) by sufficient crosslinking of the entire polymer particle can be achieved by suitably selecting or adjusting, besides the amount and manner of use of polyfunctional monomer (B) as mentioned above, the kind of polyfunctional monomer (B), the amount, kind and manner of use of an initiator, the kind, amount and manner of addition of monomers other than polyfunctional monomer (B), the polymerization temperature, a chain transfer agent, and the like.

Also, in order that the polymer (I) has an excellent ability to retain additives, which would cause plate out, to thereby exhibit a good plate out-suppressing effect, it is required that the calculated Tg value of a polymer formed from a component or components other than the polyfunctional monomer (B) is not less than 20°C, and the calculated Tg value is preferably not less than 35°C, more preferably not less than 50°C, still more preferably not less than 65°C.

In improving the granulation property required when obtaining a powder of polymer (I) and the powder characteristics, it is effective to copolymerize a soft component (a monomer capable of forming a soft polymer), which is selected from the above-mentioned monomers, into the polymer (I). The soft component may be evenly used or may be maldistributed into an inner layer or an outer layer. For example, the granulation property and powder characteristics can be efficiently improved with a decreased amount of the soft component by existing the soft component much in the outer layer of the polymer (I).

In achieving both the plate out-suppressing effect and the granulation property and powder characteristics by forming the polymer (I) to have a multi-layered structure, it is preferable that the polymer (I) has at least one inner layer formed by polymerizing a monomer component comprising 50 to 98 % by weight of a monomer (a1) selected from the group consisting of 0 to 100 % by weight of a methacrylate monomer, 0 to 40 % by weight of an acrylate monomer, 0 to 40 % by weight of a vinyl cyanide monomer, 0 to 90 % by weight of an aromatic vinyl monomer and 0 to 40 % by weight of other vinyl monomer copolymerizable therewith and 2 to 50 % by weight of a polyfunctional aromatic vinyl monomer (b1) (the total of (a1) and (b1) being 100 % by weight), and an outer layer formed by polymerizing a monomer component comprising 50 to 100 % by weight of a monomer (a2) selected from the group consisting of 0 to 50 % by weight of a methacrylate monomer, 50 to 100 % by weight of an acrylate monomer, 0 to 40 % by weight of a vinyl cyanide monomer, 0 to 50 % by weight of an aromatic vinyl monomer and 0 to 40 % by weight of other vinyl monomer copolymerizable therewith and 0 to 50 % by weight of a polyfunctional aromatic vinyl monomer (b2) (the total of (a2) and (b2) being 100 % by weight). In this case, the proportion of the outer layer is preferably not more than 50 % by weight, more preferably not more than 25 % by weight.

The polymerization of the monomer component composed of the monomers (A) and (B) may be carried out in the presence of an elastomeric polymer, but it is preferable that the content of the elastomeric polymer in the obtained graft copolymer is as small as possible. In case that the polymer (I) is a graft copolymer containing a rubber (elastomeric polymer) as a trunk polymer, it is preferable from the viewpoint of the plate out-preventing effect that the content of an elastomeric polymer having a glass transition temperature Tg of not more than -20°C is less than 20 % by weight, especially less than 10 % by weight, more especially less than 5 % by weight, based on the entire polymer. It is the most preferable that the polymer (I) does not contain the elastomeric polymer having a Tg of not more than -20°C. If the content of the elastomeric polymer having a Tg of not more than -20°C. in the polymer (I) is not less than 20 % by weight, the ability to retain additives which cause plate out is inferior, resulting in lowering of the plate out-preventing effect. The elastomeric polymer includes, for instance, a diene rubber such as butadiene rubber, styrene-butadiene rubber or acrylonitrile-butadiene rubber, an acrylic rubber, a silicone rubber, an acrylic-silicone composite rubber, an olefin-based rubber such as ethylene-propylene rubber or ethylene-propylene-diene rubber, and the like.

Examples of the methacrylate monomer included in the monomer component (A) are, for instance, a methacrylate monomer having a (hydroxy)alkyl group with 1 to 12 carbon atoms, especially 1 to 8 carbon atoms, such as methyl methacrylate, ethyl methacrylate, propyl methacrylate, butyl methacrylate, hexyl methacrylate, 2-ethylhexyl methacrylate, 2-hydroxyethyl methacrylate or 2-hydroxypropyl methacrylate, a methacrylate monomer having an alicyclic or aromatic group with 6 to 12 carbon atoms, especially 6 to 8 carbon atoms, such as cyclohexyl methacrylate or phenyl methacrylate, a methacrylate monomer having an aralkyl group with 7 to 12 carbon atoms such as benzyl methacrylate, a methacrylate monomer having an epoxy group-containing group such as glycidyl methacrylate, a methacrylate monomer having an amino group-containing group such as aminomethyl methacrylate, aminoethyl methacrylate or aminopropyl methacrylate, and the like. Of these, alkyl methacrylates having a $C_1$ to $C_4$ alkyl group, especially methyl methacrylate and butyl methacrylate, are preferred.

Examples of the acrylate monomer included in the monomer component (A) are, for instance, an acrylate monomer having a (hydroxy)alkyl group with 1 to 12 carbon atoms, especially 1 to 8 carbon atoms, such as methyl acrylate, ethyl acrylate, propyl acrylate, butyl acrylate, hexyl acrylate, octyl acrylate, nonyl acrylate, 2-ethylhexyl acrylate, 2-hydroxyethyl acrylate, 2-hydroxypropyl acrylate or 4-hydroxybutyl acrylate, an acrylate monomer having an alicyclic or aromatic group with 6 to 12 carbon atoms, especially 6 to 8 carbon atoms, such as cyclohexyl acrylate or phenyl acrylate, an acrylate monomer having an aralkyl group with 7 to 12 carbon atoms such as benzyl acrylate, and the like. Of these, alkyl acrylates having a $C_1$ to $C_4$ alkyl group, especially ethyl acrylate and butyl acrylate, are preferred.

Examples of the vinyl cyanide monomer included in the monomer component (A) are, for instance, acrylonitrile, methacrylonitrile, ethacrylonitrile, maleonitrile, fumaronitrile and the like. Of these, acrylonitrile is particularly preferred.

Examples of the aromatic vinyl monomer included in the monomer component (A) are, for instance, styrene, α-methylstyrene, o-methylstyrene, p-methylstyrene, m-methylstyrene, 2,4-dimethylstyrene, vinylnaphthalene, a halogenated styrene, and the like. Of these, styrene and α-methylstyrene are particularly preferred.

Examples of the other vinyl monomer included in the monomer component (A), which is copolymerizable with the methacrylate, acrylate, vinyl cyanide and aromatic vinyl monomers, are for instance an unsaturated acid monomer such as acrylic acid, methacrylic acid, maleic anhydride or itaconic anhydride, a glycidyl group-containing monomer such as allyl glycidyl ether, a maleimide monomer such as maleimide, N-methylmaleimide, N-ethylmaleimide, N-butylmaleimide, N-phenylmaleimide or N-cyclohexylmaleimide, an amide group-containing monomer such as acrylamide or methacrylamide, a diene monomer such as butadiene, isoprene or chloroprene, a halogenated vinyl monomer such as vinyl chloride or vinylidene chloride, an olefin monomer such as ethylene or propylene, a vinyl ester monomer such as vinyl acetate, and other monovinyl monomers.

Any of known crosslinking monomers other than diene monomers can be used as the polyfunctional monomer (B). Examples of the crosslinking monomer are, for instance, a polyfunctional aromatic vinyl monomer such as divinyl benzene, divinyl biphenyl or divinyl naphthalene, a polyfunctional (meth)acrylate monomer such as 1,3-butyleneglycol di(meth)acrylate, ethyleneglycol di(meth)acrylate, polyethyleneglycol di(meth)acrylate, propyleneglycol di(meth)acrylate, polypropyleneglycol di(meth)acrylate, allyl (meth)acrylate, isocyanule (meth)acrylate, neopentylglycol (meth)acrylate, ethyleneoxide di(meth)acrylate, propyleneoxide di(meth)acrylate, dicyclopentenyl (meth)acrylate or trimethylolpropane tri(meth)acrylate, a polyfunctional allyl monomer such as allyl (meth)acrylate, diallyl ether, diallyl phthalate, monoallyl maleate, diallyl maleate, triallyl cyanulate or triallyl isocyanulate, a polyfunctional ether monomer such as ethyleneglycol divinyl ether, and the like. Of these, polyfunctional aromatic vinyl monomers, especially divinyl benzene, are preferred from the viewpoint of the plate out-preventing effect.

The methacrylate monomer, acrylate monomer, vinyl cyanide monomer, aromatic vinyl monomer and copolymerizable other vinyl monomer which are included in the monomer component (A) are not limited to those exemplified above. Each of these monomers may be used alone or in combination of two or more monomers. In case of using each of these monomers in a combination of two or more monomers, two or more monomers may be separately used, or all or a part of two or more monomers may be used in the form of a mixture.

The method of the polymerization for the polymer (I) is not particularly limited and, for example, emulsion polymerization method, dispersion polymerization method, microemulsion polymerization method, microsuspension polymerization method, suspension polymerization method are adoptable.

In case of applying an emulsion polymerization method to the polymerization for the polymer (I), conventional emulsifiers, initiators and the like can be used.

Examples of the emulsifier are, for instance, an anionic emulsifier such as a dioctyl sulfosuccinic acid salt, a dodecylbenzenesulfonic acid salt, an alkylsulfonic acid salt or a fatty acid salt, a non-ionic emulsifier such as a polyoxyethylene alkyl ether, a non-ionic anionic emulsifier such as a polyoxyethylene nonyl phenyl ether sulfate or a polyoxyethylene alkyl ether sulfate, and the like. The emulsifier is not limited to those exemplified above. The above salts can be known ones such as sodium salts, potassium salts and ammonium salts. The emulsifiers may be used alone or in admixture thereof.

Examples of the initiator are, for instance, an inorganic peroxide such as potassium persulfate, ammonium persulfate or hydrogen peroxide, an organic peroxide such as cumene hydroperoxide, p-menthane hydroperoxide, t-butyl hydroperoxide, diisopropylbenzene hydroperoxide, t-butylperoxy isopropylcarbonate, benzoyl hydroperoxide, lauroyl hydroperoxide, cumene peroxide or azoisobutyronitrile, and the like. Known initiators can be used, including redox initiators wherein the above peroxide compounds are used in combination with, for example, sodium formaldehyde sulfoxylate, sodium sulfite, acid sodium sulfite, sodium thiosulfate, glucose, ascorbic acid, hydroxyacetonic acid, ferrous sulfate, a complex of ferrous sulfate and disodium ethylenediaminetetraacetate or the like.

Also, the polymerization temperature, polymerization time and the like are not particularly limited and can be suitably adjusted depending, for example, on the kind of the monomers used. The monomers may be added in one stage or in multi-stage. It is also possible to add the monomers in multi-stage with altering the composition of the monomers in respective stages, or in one stage with continuously altering the composition. Also, all or a part of monomers may be added at once followed by initiation of the polymerization, or the monomers may be continuously added or intermittently added with the progress of the polymerization.

From the viewpoint of the plate out-preventing effect, however, it is preferable that the polymer (I) obtained as a result of the polymerization is a polymer prepared under such polymerization conditions that the viscosity average molecular weight reaches not less than 100,000, especially not less than 300,000, more especially not less than 600,000, still more especially not less than 1,000,000 when only the component other than the polyfunctional monomer (B) is polymerized.

For adjusting the molecular weight of the polymer (I) and for obtaining the above-mentioned polymerization conditions, there can be suitably selected and adjusted the amount, kind and manner of use of initiator, the amount and manner of addition of monomers, the polymerization temperature, the chain transfer agent and the like.

The volume average particle size of polymer (I) measured by a dynamic light scattering method using MICROTRACK UPA PARTICLE ANALYZER is from 100 to 10,000 Å (10 to 1,000 nm), preferably 100 to 5,000 Å (10 to 500 nm), more preferably 200 to 3,000 Å (20 to 300 nm), still more preferably 300 to 2,000 Å (30 to 200 nm). The polymer (I) having a volume average particle size of less than 100 Å (10 nm) is difficult to prepare. On the other hand, if the volume average particle size is more than 10,000 Å (1,000 nm), no sufficient plate out-preventing effect is obtained or the physical properties of final molded articles such as transparency and impact strength are lowered.

The composition of the polymer (I) is not particularly limited so long as the above-mentioned requirements are satisfied. However, when final products are required to have a transparency, lowering of the transparency can be nearly prevented by adjusting the composition so that the refractive index of polymer (I) approaches that of a vinyl chloride resin to be incorporated with the polymer (I) as much as possible. It is preferable in obtaining a high transparency that the difference in the refractive index between polymer (I) and a vinyl chloride resin to be incorporated with the polymer (I) is within the range of ±0.1, more preferably ±0.05, further more preferably ±0.02, the most preferably ±0.01. The refractive index can be obtained by calculation from refractive indexes of homopolymers of respective monomers which constitute a polymer and weight fractions of the respective monomers.

In the vinyl chloride resin composition of the present invention, the polymer (I) is used in an amount of 0.3 to 50 parts by weight, preferably 0.3 to 20 parts by weight, more preferably 0.3 to 10 parts by weight, the most preferably 0.5 to 3 parts by weight, per 100 parts by weight of a vinyl chloride resin. If the amount of polymer (I) is less than 0.3 part by weight, the plate out-preventing effect is not sufficient. If the amount exceeds 50 parts by weight, the physical properties of final molded articles such as transparency and impact strength are lowered.

The vinyl chloride resins used in the present invention are not particularly limited. Examples of the vinyl chloride resins are, for instance, polyvinyl chloride resin, post-chlorinated polyvinyl chloride resin, partially crosslinked polyvinyl chloride resin, polyvinylidene chloride, resins containing at least 50 % by weight, especially at least 70 % by weight of vinyl chloride units, e.g., copolymers of vinyl chloride and a monomer copolymerizable therewith such as ethylene, propylene, styrene, vinyl acetate, alkyl acrylates, alkyl methacrylates, vinyl cyanide, vinylidene chloride, an unsaturated acid monomer such as acrylic acid or methacrylic acid, maleic acid ester, or fumaric acid ester. The vinyl chloride resins may be used alone or in admixture thereof. In the present invention, as the vinyl chloride resin can also be used polymer blends and polymer alloys of a vinyl chloride resin with other resins, e.g., acrylic resin, acrylonitrile-butadiene-styrene (ABS) resin, acrylonitrile-styrene (AS) resin, MS resin (MMA-ST copolymer), polyolefin resin such as chlorinated polyethylene, and polyurethane resin, so long as the polymer blends or alloys contain at least 50 % by weight of segments based on vinyl chloride or vinylidene chloride.

The vinyl chloride resin composition of the present invention may contain known various additives such as lubricant, stabilizer, plasticizer, antistatic agent, pigment, filler, blowing agent, crosslinking agent and the like.

The polymer (I) is incorporated into a vinyl chloride resin, optionally with additives as mentioned above, and the resulting composition is subjected to molding processing. The manner of incorporating the polymer (I) is not particularly limited. For example, incorporation may be carried out by simultaneously blending a vinyl chloride resin, additives and the polymer (I), or by previously blending a vinyl chloride resin with the polymer (I) and then blending the resultant with additives, or by previously blending the polymer (I) with all or a part of additives and then blending the resultant with a vinyl chloride resin, or by previously blending a vinyl chloride resin with all or a part of additives and then blending the resultant with the polymer (I).

The vinyl chloride resin composition of the present invention may contain an impact modifier, e.g., graft copolymers (so-called MBS resin and acrylic modifier) wherein methyl methacrylate, styrene, acrylonitrile and the like are graft-polymerized onto an elastomeric trunk polymer such as elastomeric diene polymers or elastomeric alkyl acrylate polymers, a processing aid such as copolymers composed of an alkyl (meth)acrylate as a main component, a modifier for heat distortion temperature, and other various modifiers.

In case of using various modifiers such as impact modifier and processing aid, the manner of the incorporation thereof is also not particularly limited. The polymer (I) may be previously blended with these modifiers. The manner of blending the polymer (I) with modifiers is also not particularly limited, and may be carried out, for example, by blending a modifier and the polymer (I) in the state of latex and obtaining a powder through a granulation step, or by adding the polymer (I) to a slurry of a modifier or its dehydrated product, or by adding the polymer (I) to a powder of a modifier. The manner of incorporating a vinyl chloride resin with such a modifier previously incorporated with the polymer (I) is also not particularly limited.

However, it is desirable in obtaining a higher plate out-preventing effect that the polymer (I) and additives which contribute to plate out, particularly lubricant, antistatic agent and stabilizer, are sufficiently mixed at the time of blending. Therefore, preferred are a blending manner wherein a vinyl chloride resin, additives and the polymer (I) are simultaneously blended, a blending manner wherein a vinyl chloride resin is previously blended with the polymer (I) and then blended with additives, and a blending manner wherein the polymer (I) is previously blended with all or a part of additives and then blended with a vinyl chloride resin. Upon the blending, various modifiers such as impact modifier, processing aid and heat distortion temperature modifier as mentioned above may be of course included, as occasion demands. Also, in case of using the polymer (I) in the form of a powder, the smaller the particle size of polymer (I), the more it is easy to be sufficiently mixed with additives and the plate out-preventing effect tends to increase. The powder of polymer (I) can be obtained by known methods, e.g., a method wherein a latex of a polymer prepared by emulsion polymerization is coagulated by adding an electrolyte or an acid thereto, followed by heat treatment, dehydration, washing and drying steps, a method wherein coagulation of a polymer latex is carried out in a gaseous phase, a method wherein a polymer latex is spray-dried in a hot air, and a method by pulverization.

The vinyl chloride resin composition of the present invention can be formed into board, sheet, film, pipe, window frame, sizing material and other molded articles.

The vinyl chloride resin composition of the present invention has a good molding processability. In particular, it shows a decreased plate out onto a metallic surface of a molding machine without increasing a tendency of sticking of a molten resin to the metallic surface of molding machine. Thus, excellent molded articles which are not deteriorated in appearance and physical properties such as strength can be obtained from the vinyl chloride resin composition.

The vinyl chloride resin of the present invention is specifically explained below by means of examples, but it is to be understood that the present invention is not limited to these examples. In the examples and comparative examples, all parts and % are by weight unless otherwise noted.

Polyvinyl chloride, processing aid and impact modifier used in the examples and comparative examples are shown below.

Polyvinyl chloride: KANEVINYL S-1007 made by Kaneka Corporation, average degree of polymerization about 700, refractive index 1.542 (589.3 nm)
Processing aid: KANEACE PA-50 made by Kaneka Corporation
Impact modifier: KANEACE B-22 made by Kaneka Corporation

Methods of measurement and methods of evaluation used in the examples and comparative examples are also shown below.

(Measurement of volume average particle size)

With respect to obtained polymer latex, the volume average particle size was measured by using MICROTRACK UPA PARTICLE ANALYZER made by Nikkiso Kabushiki Kaisha.

(Tg)

Tg of a polymer obtained by polymerization of monomers other than a polyfunctional monomer was obtained by calculation according to the following equation from Tg values of homopolymers of respective monomers described in a literature (literature values from Polymer Handbook) and weight fractions of respective monomers:

$$\frac{1}{Tg} = \sum_{k=1}^{n} \frac{Wk}{Tgk}$$

wherein Tgk denotes Tg (K) of a homopolymer of each of monomers in the polymer, and Wk denotes a weight fraction of each of monomers in the polymer.

(Proportion of an elastomeric polymer portion having a Tg of not more than -20°C based on the entire polymer)

The proportion of an elastomeric polymer portion having a Tg of not more than -20°C based on the entire polymer (which corresponds to the rubber content of a graft copolymer containing a rubber as a trunk polymer) was calculated from a polymerization formulation.

(Refractive index)

The refractive index of a polymer as a whole was obtained by calculating the weighted average of literature refractive index values of homopolymers of respective monomers used based on the weight fractions of the respective monomers. With respect to the refractive indexes of homopolymers, the values described in Polymer Handbook were adopted, and with respect to divinyl benzene, the value 1.61 described in a brochure of the maker was adopted.

(Measurement of viscosity average molecular weight)

A polymer was prepared by conducting a polymerization in the same manner as in the examples and comparative examples except that components other than polyfunctional monomer were used, followed by coagulation, heat treatment, washing, dehydration and drying. In 100 ml of acetone was dissolved 0.1 g of the obtained polymer (solid matter). The specific viscosity of the obtained solution was measured on a water bath kept at 30°C by a Ubbelohde viscometer kept at a constant temperature, and therefrom was calculated the viscosity average molecular weight.

(Measurement of the proportion of free polymer (I-1) (component which is soluble in methyl ethyl ketone and is reprecipitated with methanol))

In 40 ml of methyl ethyl ketone (hereinafter referred to as "MEK") was dissolved 1 g of a sample, and an insoluble matter was separated by centrifugation. The insoluble matter was further subjected twice to the procedure of washing with 25 ml of MEK followed by centrifugation. These supernatants were combined together to give a solution of MEK soluble matter. This solution was concentrated to 10 ml and added to 200 ml of methanol containing 0.01 g (solid basis) of calcium chloride. After stirring for 1 hour, the resulting precipitate was filtered with a glass filter. The obtained precipitate was dried and weighed, and the proportion of free polymer (I-1) was calculated according to the following equation.

Proportion of free polymer (I-1) (%) = {weight of precipitate (g) /weight of sample (g)} $\times$ 100

(Evaluation of plate out)

A vinyl chloride resin composition sample was obtained by blending 100 parts of a polyvinyl chloride, 1.3 parts of a octyl tin mercapto stabilizer, 0.6 part of a polymeric composite ester, 0.6 part of a polyol ester, 2.5 parts of epoxidized soybean oil, 0.5 part of a processing aid, 12 parts of an impact modifier and a predetermined amount of crosslinked (or non-crosslinked) polymer (P-1) to (P-24) in a predetermined manner.

The evaluation was conducted by using an 8 inch test roll mill of oil circulation type having a cleaned surface and equipped with a stock guide made by Teflon at a roll surface temperature of 203°C and at a number of revolutions of front roll of 18 r.p.m. and a number of revolutions of rear roll of 16 r.p.m. There was repeated 10 times the procedure that after kneading the above-mentioned vinyl chloride resin composition on the front roll for 4 minutes, the sheet-like kneaded composition was taken out of the roll and the fresh vinyl chloride resin composition was placed in the test roll mill without cleaning the roll surface and kneaded on the front roll for 4 minutes. The degree of contamination of the metallic surface of rear roll was then visually observed and evaluated according to the following criteria.

5: No contamination is observed.
4: Very slight contamination is observed.
3: Slight contamination is observed.
2: Contamination is observed all over the surface.
1: Contamination is clearly observed all over the surface.
0: Marked contamination is observed.

(Evaluation of stickiness)

With respect to the same vinyl chloride resin composition sample as used in the evaluation of plate out, the stickiness onto a metallic surface of a molding machine was evaluated by using an 8 inch test roll mill equipped with a stock guide made by Teflon and equipped with an auxiliary roll in front of the front roll apart therefrom at a roll surface temperature of 190°C and at a number of revolutions of front roll of 23 r.p.m. and a number of revolutions of rear roll of 21 r.p.m. The vinyl chloride resin composition sample was placed in the roll mill and kneaded. When the composition sample wound round the roll, the sheet-like kneaded composition was set between the front roll and the auxiliary roll like a belt and rotated while kneading. The time until the sheet sticks to the front roll to be wound round the front roll was measured. The longer the time, the more the composition is hard to cause sticking. Conversely, the shorter the time, the more the composition is easy to cause sticking.

(Evaluation of physical properties of molded articles)

A vinyl chloride resin composition sample was obtained by blending 100 parts of a polyvinyl chloride, 1 part of a octyl tin mercapto stabilizer, 0.2 part of a montanic acid ester, 0.6 part of a polyol ester, 8 parts of an impact modifier and a predetermined amount of crosslinked (or non-crosslinked) polymer (P-1) to (P-24) in a predetermined manner. The composition was kneaded by a heat roll at 160°C for 5 minutes and was subjected to pressure molding by a heat press at 190°C for 15 minutes to give a sheet specimen having a thickness of 5 mm for transparency test and a specimen having a thickness of 6 mm for Izod impact test. With respect to the transparency, the light transmittance of the sheet specimen was measured according to JIS K6714. With respect to the impact strength, the Izod impact strength was measured at 23°C according to JIS K7110.

EXAMPLE 1

An 8 liter reactor equipped with a stirrer was charged with 400 parts of water (total amount including water included in sub-raw materials added after), 0.15 part of sodium oleate, 0.004 part of ferrous sulfate ($FeSO_4 \cdot 7H_2O$), 0.016 part of disodium ethylenediaminetetraacetate (hereinafter referred to as "EDTA") and 0.3 part of sodium formaldehyde sulfoxylate (hereinafter referred to as "SFS"). The temperature was elevated to 60°C in a nitrogen atmosphere with stirring. A monomer mixture composed of 80.8 parts of methyl methacrylate (hereinafter referred to as "MMA"), 14.2 parts of butyl acrylate (hereinafter referred to as "BA"), 5 parts of divinyl benzene (hereinafter referred to as "DVB") and 0.6 part of cumene hydroperoxide (hereinafter referred to as "CHP") was then continuously added to the reactor over 5 hours. Also, 0.5 part portions of sodium oleate were added to the reactor 2 hours, 4 hours and 6 hours after the start of the addition of the monomer mixture. After the completion of the addition of the monomer mixture, the reactor was kept at 60°C for 120 minutes and then cooled to give a polymer latex. The polymerization conversion at that time was not less than 99 %. The obtained polymer latex was coagulated with an aqueous solution of sulfuric acid, neutralized with an aqueous solution of sodium hydroxide, heat-treated by elevating the temperature to 99°C, washed and dehydrated. The resulting resin cake was dried in a hot air drier kept at 50°C for 24 hours to give a white powder of a crosslinked polymer (P-1). The volume average particle size, Tg, proportion of an elastomeric polymer portion having a Tg of not more than -20°C based on the entire polymer, refractive index, viscosity average molecular weight and proportion of free polymer were obtained. The results are shown in Table 1.
A vinyl chloride resin composition sample for the evaluation was then prepared by adding an impact modifier and 1 part of the crosslinked polymer (P-1) to a polyvinyl chloride base compound previously prepared by blending 100 parts of a polyvinyl chloride, a processing aid and predetermined additives in a super mixer, and was subjected to the evaluation of plate out. The results are shown in Table 2.
The stickiness was also evaluated and found to be 203 seconds.

EXAMPLE 2

Crosslinked polymer (P-2) was prepared in the same manner as in Example 1 except that the amounts of the ingredients initially charged into the 8 liter reactor were changed to 0.2 part sodium oleate, 0.0005 part ferrous sulfate ($FeSO_4 \cdot 7H_2O$), 0.002 part EDTA and 0.03 part SFS and the amount of CHP included in the monomer mixture was changed to 0.1 part (the polymerization conversion being not less than 99 %). The measurement thereof was carried out in the same manner as in Example 1. Also, a vinyl chloride resin composition sample for the evaluation was obtained in the same manner as in Example 1 except that the crosslinked polymer (P-2) was used, and it was subjected to the evaluation of plate out. The results are shown in Table 2.

EXAMPLE 3

An 8 liter reactor equipped with a stirrer was charged with 200 parts of water (total amount including water included in sub-raw materials added after), 0.125 part of sodium dioctylsulfosuccinate (hereinafter referred to as "SDOSS"), 0.05 part of sodium sulfate and 0.1 part of potassium persulfate. The temperature was elevated to 70°C in a nitrogen atmosphere with stirring. A monomer mixture composed of 51 parts of MMA, 9 parts of BA, 35 parts of styrene (hereinafter referred to as "ST") and 5 parts of DVB was then continuously added to the reactor over 5 hours. Also, 0.15 part portions of SDOSS were added to the reactor 1.5 hours and 3 hours after the start of the addition. After the completion of the addition of the monomer mixture, the reactor was kept at 70°C for 90 minutes to complete the polymerization and then cooled to give a latex of a polymer having a crosslinked structure. The polymerization conversion at that time was not less than 99 %. The obtained polymer latex was coagulated by salting out with an aqueous solution of calcium chloride, heat-treated by elevating the temperature to 98°C, washed and dehydrated. The resulting resin cake was dried in a hot air drier kept at 50°C for 24 hours to give a white powder of a crosslinked polymer (P-3).

The crosslinked polymer (P-3) was evaluated in the same manner as in Example 1. The results are shown in Table 1.

A vinyl chloride resin composition sample for the evaluation was then prepared by adding an impact modifier and 1 part of the crosslinked polymer (P-3) to a polyvinyl chloride base compound previously prepared by blending 100 parts of a polyvinyl chloride, a processing aid and predetermined additives in a super mixer, and was subjected to the evaluation of plate out. The results are shown in Table 2.

The stickiness, transparency and Izod impact strength were also measured and found to be 201 seconds, 81.5 % and 15.7 kg·cm/cm, respectively.

EXAMPLE 4

Crosslinked polymer (P-4) was prepared in the same manner as in Example 3 except that the amounts of the initially charged ingredients were changed to 0.2 part SDOSS, 0.025 part potassium persulfate, a monomer mixture composed of 80.8 parts of MMA, 14.2 parts of BA and 5 parts of DVB was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-4) was used, and it was subjected to the evaluation of plate out. The results are shown in Table 2.

EXAMPLE 5

Crosslinked polymer (P-5) was prepared in the same manner as in Example 3 except that a monomer mixture composed of 76 parts of ST, 19 parts of acrylonitrile (hereinafter referred to as "AN") and 5 parts of DVB was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-5) was used, and it was subjected to the evaluation of plate out. The results are shown in Table 2.

EXAMPLE 6

Crosslinked polymer (P-6) was prepared in the same manner as in Example 1 except that the amount of the initially charged sodium oleate was changed to 0.3 part and a monomer mixture composed of 43.5 parts of MMA, 10 parts of BA, 43.5 parts of ST and 3 parts of DVB was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-6) was used, and it was subjected to the evaluation of plate out. The results are shown in Table 2.

EXAMPLE 7

Crosslinked polymer (P-7) was prepared in the same manner as in Example 1 except that the amount of the initially charged sodium oleate was changed to 0.3 part and a monomer mixture composed of 40 parts of MMA, 10 parts of BA, 40 parts of ST and 10 parts of DVB was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-7) was used, and it was subjected to the evaluation of plate out. The results are shown in Table 2.

EXAMPLE 8

Crosslinked polymer (P-8) was prepared in the same manner as in Example 1 except that the amount of the initially charged sodium oleate was changed to 0.3 part and a monomer mixture composed of 35 parts of MMA, 10 parts of BA, 35 parts of ST and 20 parts of DVB was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-8) was used, and it was subjected to the evaluation of plate out. The results are shown in Table 2.

EXAMPLE 9

Crosslinked polymer (P-9) was prepared in the same manner as in Example 1 except that the amount of the initially charged sodium oleate was changed to 0.1 part and a monomer mixture composed of 51 parts of MMA, 9 parts of BA, 35 parts of ST and 5 parts of DVB was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-9) was used, and it was subjected to the evaluation of plate out. The results are shown in Table 2.

Also, the transparency and Izod impact strength were measured and found to be 81.3 % and 15.9 kg·cm/cm, respectively.

EXAMPLE 10

Crosslinked polymer (P-10) was prepared in the same manner as in Example 1 except that the amount of the initially charged sodium oleate was changed to 1.0 part and a monomer mixture composed of 51 parts of MMA, 9 parts of BA, 35 parts of ST and 5 parts of DVB was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-10) was used, and it was subjected to the evaluation of plate out. The results are shown in Table 2.

Also, the transparency and Izod impact strength were measured and found to be 81.3 % and 15.6 kg·cm/cm, respectively.

EXAMPLE 11

Crosslinked polymer (P-11) was prepared in the same manner as in Example 3 except that the amount of the initially charged SDOSS was changed to 0.1 part (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-11) was used, and it was subjected to the evaluation of plate out. The results are shown in Table 2.

Also, the transparency and Izod impact strength were measured and found to be 81.3 % and 14.1 kg·cm/cm, respectively.

EXAMPLE 12

Crosslinked polymer (P-12) was prepared in the same manner as in Example 3 except that the amount of the initially charged SDOSS was changed to 0.35 part (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-12) was used, and it was subjected to the evaluation of plate out. The results are shown in Table 2.

Also, the transparency and Izod impact strength were measured and found to be 82.0 % and 14.1 kg·cm/cm, respectively.

EXAMPLE 13

Crosslinked polymer (P-13) was prepared in the same manner as in Example 4 except that the amount of the initially charged potassium persulfate was changed to 0.01 part and, after the monomer mixture was added at once. the reaction system was kept at 70°C for 3 hours to complete the polymerization (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-13) was used, and it was subjected to the evaluation of plate out. The results are shown in Table 2.

Also, the stickiness was measured and found to be 195 seconds.

EXAMPLE 14

Crosslinked polymer (P-14) was prepared in the same manner as in Example 3 except that the initially charged SDOSS and potassium persulfate were used in amounts of 0.25 part and 0.05 part respectively (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-14) was used, and it was subjected to the evaluation of plate out. The results are shown in Table 2.

Also, the transparency and Izod impact strength were measured and found to be 80.3 % and 12.4 kg·cm/cm, respectively.

EXAMPLE 15

Crosslinked polymer (P-15) was prepared in the same manner as in Example 3 except that the initially charged SDOSS and potassium persulfate were used in amounts of 0.25 part and 0.2 part respectively (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-15) was used, and it was subjected to the evaluation of plate out. The results are shown in Table 2.

Also, the transparency and Izod impact strength were measured and found to be 79.5 % and 12.4 kg·cm/cm, respectively.

EXAMPLE 16

Crosslinked polymer (P-16) was prepared in the same manner as in Example 3 except that the initially charged SDOSS and potassium persulfate were used in amounts of 0.25 part and 0.4 part respectively (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the crosslinked polymer (P-16) was used, and it was subjected to the evaluation of plate out. The results are shown in Table 2.

Also, the transparency and Izod impact strength were measured and found to be 80.2 % and 14.5 kg·cm/cm, respectively.

EXAMPLE 17

A vinyl chloride resin composition sample for the evaluation was obtained in the same manner as in Example 3 except that the amount of the crosslinked polymer (P-3) added to the polyvinyl chloride base compound was 20 parts. It was subjected to the evaluation of plate out. The results are shown in Table 2.

EXAMPLE 18

A vinyl chloride resin composition sample for the evaluation was obtained in the same manner as in Example 3 except that the amount of the crosslinked polymer (P-3) added to the polyvinyl chloride base compound was 10 parts. It was subjected to the evaluation of plate out. The results are shown in Table 2.

EXAMPLE 19

A vinyl chloride resin composition sample for the evaluation was obtained in the same manner as in Example 3 except that the amount of the crosslinked polymer (P-3) added to the polyvinyl chloride base compound was 3 parts. It was subjected to the evaluation of plate out. The results are shown in Table 2.

The stickiness was 186 seconds.

EXAMPLE 20

A vinyl chloride resin composition sample for the evaluation was obtained in the same manner as in Example 3 except that the amount of the crosslinked polymer (P-3) added to the polyvinyl chloride base compound was 0.5 part. It was subjected to the evaluation of plate out. The results are shown in Table 2.

EXAMPLE 21

A vinyl chloride resin composition sample for the evaluation was obtained in the same manner as in Example 3 except that the amount of the crosslinked polymer (P-3) added to the polyvinyl chloride base compound was 0.3 part. It was subjected to the evaluation of plate out. The results are shown in Table 2.

EXAMPLE 22

A vinyl chloride resin composition sample for the evaluation was obtained in the same manner as in Example 3 except that the amount of the crosslinked polymer (P-3) was 0.5 part and all of polyvinyl chloride, predetermined additives, processing aid, impact modifier and crosslinked polymer (P-3) were simultaneously blended in a usual manner by a super mixer. It was subjected to the evaluation of plate. out. The results are shown in Table 2.

EXAMPLE 23

A vinyl chloride resin composition sample for the evaluation was obtained in the same manner as in Example 3 except that the amount of the crosslinked polymer (P-3) was 1 part, and an impact modifier containing crosslinked polymer (P-3) which was prepared by previously mixing impact modifier and crosslinked polymer (P-3) in the form of latex followed by a usual granulation step, was added to the polyvinyl chloride base compound. It was subjected to the evaluation of plate out. The results are shown in Table 2.

EXAMPLE 24

An 8 liter reactor equipped with a stirrer was charged with 200 parts of water (total amount including water included in sub-raw materials added after), 0.15 part of SDOSS, 0.05 part of sodium sulfate and 0.1 part of potassium persulfate. The temperature was elevated to 70°C in a nitrogen atmosphere with stirring. A monomer mixture composed of 41 parts of MMA, 35 parts of ST and 4 parts of DVB was then continuously added to the reactor over 4 hours. During this period, 0.15 part portions of SDOSS were added to the reactor 1.5 hours and 3 hours after the start of the addition. Ten minutes after the completion of the addition of the monomer mixture, another monomer mixture composed of 10 parts of MMA, 9 parts of BA and 1 part of DVB was continuously added to the reactor over 1 hour. After the completion of the second stage monomer mixture, the reactor was kept at 70°C for 90 minutes to complete the polymerization and then cooled to give a latex of a two stage-polymerized polymer having a crosslinked structure. The polymerization conversion at that time was not less than 99 %. The obtained polymer latex was coagulated by salting out with an aqueous solution of calcium chloride, heat-treated by elevating the temperature to 98°C, washed and dehydrated. The resulting resin cake was dried in a hot air drier kept at 50°C for 24 hours to give a white powder of a crosslinked polymer (P-23). The crosslinked polymer (P-23) was evaluated in the same manner as in Example 1. The results are shown in Table 1.
A vinyl chloride resin composition sample for the evaluation was then prepared in the same manner as in Example 1 except that the crosslinked polymer (P-23) was used, and it was subjected to the evaluation of plate out. The results are shown in Table 2.

EXAMPLE 25

An 8 liter reactor equipped with a stirrer was charged with 200 parts of water (total amount including water included in sub-raw materials added after), 0.15 part of SDOSS, 0.05 part of sodium sulfate and 0.1 part of potassium persulfate. The temperature was elevated to 70°C in a nitrogen atmosphere with stirring. A monomer mixture composed of 43 parts of MMA, 2 parts of BA, 35 parts of ST and 5 parts of DVB was then continuously added to the reactor over 4.5 hours. During this period, 0.15 part portions of SDOSS were added to the reactor 1.5 hours and 3 hours after the start of the addition. Ten minutes after the completion of the addition of the monomer mixture, another monomer mixture composed of 8 parts of MMA and 7 parts of BA was continuously added to the reactor over 30 minutes. After the completion of the second stage monomer mixture, the reactor was kept at 70°C for 90 minutes to complete the polymerization and then cooled to give a latex of a two stage-polymerized polymer having a crosslinked structure. The polymerization conversion at that time was not less than 99 %. The obtained polymer latex was coagulated by salting out with an aqueous solution of calcium chloride, heat-treated by elevating the temperature to 98°C, washed and dehydrated. The resulting resin cake was dried in a hot air drier kept at 50°C for 24 hours to give a white powder of a crosslinked polymer (P-24). The crosslinked polymer (P-24) was evaluated in the same manner as in Example 1. The results are shown in Table 1.

A vinyl chloride resin composition sample for the evaluation was then prepared in the same manner as in Example 1 except that the crosslinked polymer (P-24) was used, and it was subjected to the evaluation of plate out. The results are shown in Table 2.

COMPARATIVE EXAMPLE 1

Non-crosslinked polymer (P-17) was prepared in the same manner as in Example 1 except that a monomer mixture composed of only 80.8 parts of MMA and 14.2 parts of BA was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the non-crosslinked polymer (P-17) was used, and it was subjected to the evaluation of plate out. The results are shown in Table 3.

COMPARATIVE EXAMPLE 2

Non-crosslinked polymer (P-18) was prepared in the same manner as in Example 2 except that a monomer mixture composed of only 80.8 parts of MMA and 14.2 parts of BA was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the non-crosslinked polymer (P-18) was used, and it was subjected to the evaluation of plate out. The results are shown in Table 3.

COMPARATIVE EXAMPLE 3

Non-crosslinked polymer (P-19) was prepared in the same manner as in Example 3 except that a monomer mixture composed of only 51 parts of MMA, 9 parts of BA and 35 parts of ST was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the non-crosslinked polymer (P-19) was used, and it was subjected to the evaluation of plate out. The results are shown in Table 3.

COMPARATIVE EXAMPLE 4

Non-crosslinked polymer (P-20) was prepared in the same manner as in Example 3 except that a monomer mixture composed of 44.5 parts of MMA, 10 parts of BA, 44.5 parts of ST and 1 part of DVB was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the non-crosslinked polymer (P-20) was used, and it was subjected to the evaluation of plate out. The results are shown in Table 3.

COMPARATIVE EXAMPLE 5

Non-crosslinked polymer (P-21) was prepared in the same manner as in Example 13 except that a monomer mixture composed of only 80.8 parts of MMA and 14.2 parts of BA was used (the polymerization conversion being not less than 99 %). The measurement was carried out in the same manner as in Example 1. The results are shown in Table 1.

Also, a vinyl chloride resin composition sample for the evaluation was obtained in the same manner as in Example 1 except that the non-crosslinked polymer (P-21) was used, and it was subjected to the evaluation of plate out. The results are shown in Table 3.

COMPARATIVE EXAMPLE 6

An 8 liter reactor equipped with a stirrer was charged with 250 parts of water (total amount including water included in sub-raw materials added after), 1.5 parts of sodium oleate, 0.2 part of sodium naphthalenesulfonate, 0.005 part of ferrous sulfate (FeSO$_4$·7H$_2$O), 0.01 part of EDTA, 0.4 part SFS and 0.5 part of sodium phosphate dodecahydrate. The temperature was elevated to 50°C in a nitrogen atmosphere with stirring. A monomer mixture composed of 100 parts of BA, 4 parts of allyl methacrylate and 0.2 part of CHP was then continuously added to the reactor over 4 hours. After the completion of the addition of the monomer mixture, the reactor was kept at 50°C for 120 minutes to complete the polymerization, thus giving a latex of an elastomeric acrylic polymer. The polymerization conversion at that time was not less than 99 %. To 280 parts (solid matter 80 parts) of the obtained latex were added 0.005 part of ferrous sulfate (FeSO$_4$·7H$_2$O), 0.01 part of EDTA and 0.2 part SFS, and after elevating the temperature to 60°C, thereto was graft-polymerized a monomer mixture composed of 13.5 parts of MMA, 2.7 parts of butyl methacrylate, 1.8 parts of ethyl acrylate, 2 parts of DVB and 0.2 part of CHP to give a latex of a graft polymer. The polymerization conversion at that time was not less than 99 %. The obtained polymer latex was coagulated with calcium chloride, heat-treated, washed and dehydrated. The resulting resin cake was dried in a hot air drier kept at 50°C for 24 hours to give a white powder of a graft polymer (P-22). The measurement was conducted in the same manner as in Example 1. The results are shown in Table 1.
Also, a vinyl chloride resin composition sample for the evaluation was obtained in the same manner as in Example 1 except that the graft polymer (P-22) was used, and it was subjected to the evaluation of plate out. The results are shown in Table 3.

COMPARATIVE EXAMPLE 7

A vinyl chloride resin composition sample for the evaluation was obtained in the same manner as in Example 1 except that the crosslinked polymer (P-1) was not used, and it was subjected to the evaluation of plate out. The results are shown in Table 3.
Also, the stickiness, transparency and Izod impact strength were measured and found to be 203 seconds, 81.9 % and 14.8 kg·cm/cm, respectively.

COMPARATIVE EXAMPLE 8

A vinyl chloride resin composition sample for the evaluation was obtained in the same manner as in Example 1 except that the amount of the polymeric composite ester included in the base compound was 0.3 part, and it was subjected to the evaluation of plate out. The results are shown in Table 3.
The stickiness was measured and found to be 89 seconds.

## Table 1

| Cross-linked or non-cross-linked polymer | Volume average particle size (Å) | Tg* (°C) | Proportion of elastomeric polymer portion having Tg of at most -20°C based on the entire polymer (%) | Refractive index of cross-linked or non-cross-linked polymer | Viscosity average molecular weight | Content of free polymer (%) | Composition (part) |
|---|---|---|---|---|---|---|---|
| P-1 | 1,610 | 68.0 | 0 | 1.492 | 200,000 | 0.7 | MMA/BA/DVB=80.8/14.2/5 |
| P-2 | 1,560 | 68.0 | 0 | 1.492 | 1,200,000 | 0.7 | MMA/BA/DVB=80.8/14.2/5 |
| P-3 | 1,590 | 79.0 | 0 | 1.529 | 600,000 | 0.7 | MMA/BA/ST/DVB=51/9/35/5 |
| P-4 | 1,580 | 68.0 | 0 | 1.492 | 1,700,000 | 0.6 | MMA/BA/DVB=80.8/14.2/5 |
| P-5 | 1,720 | 99.4 | 0 | 1.578 | 500,000 | 1.0 | ST/AN/DVB=76/19/5 |
| P-6 | 1,130 | 76.7 | 0 | 1.535 | 200,000 | 3.8 | MMA/BA/ST/DVB=43.5/10/43.5/3 |
| P-7 | 870 | 74.9 | 0 | 1.540 | 200,000 | 1.0 | MMA/BA/ST/DVB=40/10/40/10 |
| P-8 | 830 | 71.7 | 0 | 1.547 | 200,000 | 0.8 | MMA/BA/ST/DVB=35/10/35/20 |
| P-9 | 2,560 | 79.0 | 0 | 1.529 | 200,000 | 0.6 | MMA/BA/ST/DVB=51/9/35/5 |
| P-10 | 280 | 79.0 | 0 | 1.529 | 200,000 | 6.4 | MMA/BA/ST/DVB=51/9/35/5 |
| P-11 | 1,920 | 79.0 | 0 | 1.529 | 600,000 | 0.7 | MMA/BA/ST/DVB=51/9/35/5 |
| P-12 | 980 | 79.0 | 0 | 1.529 | 600,000 | 0.9 | MMA/BA/ST/DVB=51/9/35/5 |

- continued -

* Calculated Tg of a polymer formed when components other than polyfunctional monomer are copolymerized.
** Polymer molecules are all regarded as free polymer because of formulation for non-crosslinking containing no polyfunctional monomer

EP 1 167 440 A1

- continued -

| Cross-linked or non-cross-linked polymer | Volume average particle size (Å) | Tg* (°C) | Proportion of elastomeric polymer portion having Tg of at most -20°C based on the entire polymer (%) | Refractive index of cross-linked or non-cross-linked polymer | Viscosity average molecular weight | Content of free polymer (%) | Composition (part) |
|---|---|---|---|---|---|---|---|
| P-13 | 1,510 | 68.0 | 0 | 1.492 | 9,000,000 | 2.4 | MMA/BA/DVB=80.8/14.2/5 |
| P-14 | 1,930 | 79.0 | 0 | 1.529 | 1,300,000 | 0.4 | MMA/BA/ST/DVB=51/9/35/5 |
| P-15 | 1,650 | 79.0 | 0 | 1.529 | 400,000 | 0.7 | MMA/BA/ST/DVB=51/9/35/5 |
| P-16 | 1,310 | 79.0 | 0 | 1.529 | 300,000 | 0.7 | MMA/BA/ST/DVB=51/9/35/5 |
| P-17 | 820 | 68.0 | 0 | 1.486 | 200,000 | 100** | MMA/BA=80.8/14.2 |
| P-18 | 900 | 68.0 | 0 | 1.486 | 1,200,000 | 100** | MMA/BA=80.8/14.2 |
| P-19 | 1,900 | 79.0 | 0 | 1.527 | 600,000 | 100** | MMA/BA/ST=51/9/35 |
| P-20 | 890 | 77.2 | 0 | 1.533 | 600,000 | 11.0 | MMA/BA/ST/DVB=44.5/10/44.5/1 |
| P-21 | 2,350 | 68.0 | 0 | 1.486 | 9,000,000 | 100** | MMA/BA=80.8/14.2 |
| P-22 | - | -38.2 | 80 | - | - | - | - |
| P-23 | 1,260 | 79.0 | 0 | 1.529 | 600,000 | 1.0 | (MMA/ST/DVB=41/35/4)<br>←—(MMA/ST/DVB=10/9/1) |
| P-24 | 1,210 | 79.0 | 0 | 1.529 | 600,000 | 3.9 | (MMA/BA/ST/DVB=43/2/35/5)<br>←—(MMA/BA=8/7) |

\* Calculated Tg of a polymer formed when components other than polyfunctional monomer are copolymerized.
\*\* Polymer molecules are all regarded as free polymer because of formulation for non-crosslinking containing no polyfunctional monomer

Table 2

| Example No. | Polymer | Amount of crosslinked polymer (part) | Results of evaluation |
| --- | --- | --- | --- |
| | | | Plate out |
| 1 | P-1 | 1 | 4 |
| 2 | P-2 | 1 | 5 |
| 3 | P-3 | 1 | 5 |
| 4 | P-4 | 1 | 5 |
| 5 | P-5 | 1 | 5 |
| 6 | P-6 | 1 | 4 |
| 7 | P-7 | 1 | 5 |
| 8 | P-8 | 1 | 5 |
| 9 | P-9 | 1 | 5 |
| 10 | P-10 | 1 | 4 |
| 11 | P-11 | 1 | 5 |
| 12 | P-12 | 1 | 5 |
| 13 | P-13 | 1 | 4 |
| 14 | P-14 | 1 | 5 |
| 15 | P-15 | 1 | 5 |
| 16 | P-16 | 1 | 4.5 |
| 17 | P-3 | 20 | 5 |
| 18 | P-3 | 10 | 5 |
| 19 | P-3 | 3 | 5 |
| 20 | P-3 | 0.5 | 4.5 |
| 21 | P-3 | 0.3 | 4 |
| 22 | P-3 | 0.5 | 5 |
| 23 | P-3 | 1 | 4 |
| 24 | P-23 | 1 | 4.5 |
| 25 | P-24 | 1 | 4 |

Table 3

| Comparative Example No. | Polymer | Amount of crosslinked polymer (part) | Results of evaluation |
| --- | --- | --- | --- |
| | | | Plate out |
| 1 | P-17 | 1 | 2 |
| 2 | P-18 | 1 | 2 |
| 3 | P-19 | 1 | 2 |
| 4 | P-20 | 1 | 2.5 |
| 5 | P-21 | 1 | 3 |
| 6 | P-22 | 1 | 1.5 |
| 7 | - | 0 | 1.5 |
| 8 | - | 0 | 4 |

INDUSTRIAL APPLICABILITY

According to the present invention, there can be obtained vinyl chloride resin compositions having an excellent molding processability which are improved in occurrence of plate out onto a metallic surface of molding machines without impairing the physical properties and appearance of molded articles and without increasing a tendency of sticking of a molten resin on the metallic surface of molding machines.

## EP 1 167 440 A1

**Claims**

1. A vinyl chloride resin composition comprising a vinyl chloride resin and 0.3 to 50 parts by weight of a polymer (I) having a crosslinked structure per 100 parts by weight of said vinyl chloride resin, wherein said polymer (I) is a product obtained by polymerizing a monomer component comprising 50 to 98 parts by weight of a monomer component (A) comprising 60 to 100 % by weight of at least one monomer selected from the group consisting of a methacrylate monomer, an acrylate monomer, a vinyl cyanide monomer and an aromatic vinyl monomer and 0 to 40 % by weight of other vinyl monomer copolymerizable therewith (the total being 100 % by weight), and 2 to 50 parts by weight of a polyfunctional monomer (B), the total of said (A) and (B) being 100 parts by weight, in the presence or absence of an elastomeric polymer, the volume average particle size of said polymer (I) is from 10 to 1,000 nm, and the glass transition temperature Tg of a polymer formed when a monomer or monomers other than said polyfunctional monomer are polymerized is not less than 20°C.

2. The composition of Claim 1, wherein the content of a component, which is soluble in methyl ethyl ketone and is reprecipitated with methanol, in said polymer (I) is not more than 10 % by weight.

3. The composition of Claim 1 or 2, wherein said polymer (I) is prepared under such polymerization conditions that a polymer having a viscosity average molecular weight of at least 100,000 is produced when the component other than the polyfunctional monomer is polymerized.

4. The composition of Claim 1, 2 or 3, wherein said polymer (I) does not contain an elastomeric polymer portion having a Tg of not more than -20°C or contains less than 20 % by weight of said elastomeric polymer portion.

5. The composition of any of Claims 1 to 4, wherein said polyfunctional monomer (B) which constitutes said polymer (I) is a polyfunctional aromatic vinyl monomer.

6. The composition of any of Claims 1 to 5, wherein the difference in refractive index between said polymer (I) and said vinyl chloride resin is within the range of ±0.1.

7. The composition of any of Claims 1 to 6, wherein said polymer (I) is prepared by polymerization of a monomer component (the total being 100 parts by weight) which comprises 50 to 98 parts by weight of a monomer component comprising 0 to 100 % by weight of a methacrylate monomer, 0 to 40 % by weight of an acrylate monomer, 0 to 40 % by weight of a vinyl cyanide monomer, 0 to 90 % by weight of an aromatic vinyl monomer and 0 to 40 % by weight of other vinyl monomer copolymerizable therewith (the total of them being 100 % by weight), and 2 to 50 parts by weight of a polyfunctional aromatic vinyl monomer.

8. The composition of Claim 1, 2, 3, 4 or 6, wherein said polymer (I) has at least one inner layer formed by polymerizing a monomer component comprising 50 to 98 % by weight of a monomer (a1) selected from the group consisting of 0 to 100 % by weight of a methacrylate monomer, 0 to 40 % by weight of an acrylate monomer, 0 to 40 % by weight of a vinyl cyanide monomer, 0 to 90 % by weight of an aromatic vinyl monomer and 0 to 40 % by weight of other vinyl monomer copolymerizable therewith and 2 to 50 % by weight of a polyfunctional aromatic vinyl monomer (b1) (the total of (a1) and (b1) being 100 % by weight), and an outer layer formed by polymerizing a monomer component comprising 50 to 100 % by weight of a monomer (a2) selected from the group consisting of 0 to 50 % by weight of a methacrylate monomer, 50 to 100 % by weight of an acrylate monomer, 0 to 40 % by weight of a vinyl cyanide monomer, 0 to 50 % by weight of an aromatic vinyl monomer and 0 to 40 % by weight of other vinyl monomer copolymerizable therewith and 0 to 50 % by weight of a polyfunctional aromatic vinyl monomer (b2) (the total of (a2) and (b2) being 100 % by weight).

9. The composition of any of Claims 1 to 8, wherein the incorporation of said polymer (I) into said vinyl chloride resin is carried out by simultaneously blending said vinyl chloride resin, additives and said polymer (I), or by previously blending said vinyl chloride resin with said polymer (I) and then blending the resultant with additives, or by previously blending said polymer (I) with additives and then blending the resultant with said vinyl chloride resin.

<table>
<tr><td colspan="2" align="center">**INTERNATIONAL SEARCH REPORT**</td><td>International application No.<br>**PCT/JP00/01256**</td></tr>
</table>

**A. CLASSIFICATION OF SUBJECT MATTER**

IntCl[7] C08L27/06, (C08L27/06, C08L51:06, C08L33:06)

According to International Patent Classification (IPC) or to both national classification and IPC

**B. FIELDS SEARCHED**

Minimum documentation searched (classification system followed by classification symbols)

IntCl[7] C08L27/06, (C08L27/06, C08L51:06, C08L33:06)

Documentation searched other than minimum documentation to the extent that such documents are included in the fields searched

Electronic data base consulted during the international search (name of data base and, where practicable, search terms used)

Derwent WPI/L "CO8L-027/06/MA"; "CROSSLINKABLE" in abstracts

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 58-029856,A, (Mitsubishi Rayon Co., Ltd.)<br>22.February.1983(22.02.83)<br>Claims; page 3, upper right column, line 9 to lower left column, line 8; page 4, lower left column, lines 8 to 15; Implementation examples (Family: none) | 1-9<br>1-9 |
| X<br>Y | JP 03-070777,A, (Kanegafuchi Chem. Ind. Co., Ltd.)<br>26.March.1991(26.03.91)<br>Claims; page 2, lower right column, line 8 to page 3, upper left column, line 10; page 3, upper right column, line 13 to lower left column, line 3; Implementation examples (Family: none) | 1-9<br>1-9 |
| X<br>Y | JP 04-345646,A, (Sekisui Chemical Co., Ltd.)<br>1.December.1992(01.12.92)<br>Claims; page 2, right column, line 50 to page 3, left column, line 42; page 4, right column, lines 7 to 14; Implementation examples (Family: none) | 1-9<br>1-9 |
| X<br>Y | JP 07-258351,A, (TOUPE K.K.) 9.October.1995(09.10.95)<br>Claims; page 4, left column, lines 34 to 50(Family: none) | 1-6,9<br>7-8 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 May, 2000 (26.05.00) | 06.06.00 |

| Name and mailing address of the ISA/<br>Japanese Patent Office | Authorized officer |
|---|---|
| Facsimile No. | Telephone No. |

Form PCT/ISA/210 (second sheet) (July 1992)